# EUROPEAN PATENT SPECIFICATION

(11) **EP 3 136 405 B1**
(45) Date of publication and mention of the grant of the patent: **26.09.2018**
(21) Application number: 15800020.8
(22) Date of filing: 18.05.2015
(51) Int. Cl.: H01F 27/30, H01F 17/04, H02M 1/00, H01F 3/10, H01F 37/00, H01F 27/34

(54) **COUPLING INDUCTOR AND POWER CONVERTER**
KOPPLUNG VON INDUKTOR UND STROMWANDLER
INDUCTANCE DE COUPLAGE ET CONVERTISSEUR DE PUISSANCE

(30) Priority: 27.05.2014 CN 201410228277
(43) Date of publication of application: 01.03.2017
(73) Proprietor: Huawei Technologies Co., Ltd., Longgang District Shenzhen, Guangdong 518129 (CN)
(72) Inventor: HU, Yanshen, Shenzhen, Guangdong 518129 (CN); LIU, Yunfeng, Shenzhen, Guangdong 518129 (CN); YE, Fei, Shenzhen, Guangdong 518129 (CN)
(74) Representative: Epping - Hermann - Fischer
(86) International application number: PCT/CN2015/079222
(87) International publication number: WO 2015/180577

(56) References cited:
- EP-A1- 2 685 477
- EP-A2- 2 088 603
- CN-A- 104 021 921
- CN-U- 201 749 774
- CN-Y- 2 651 907
- CN-Y- 2 727 918
- DE-A1- 3 533 323
- JP-A- H02 203 507
- JP-A- 2008 041 879
- KR-A- 20140 066 837
- US-A1- 2011 025 445
- US-A1- 2012 206 232
- US-A1- 2013 127 434

## Description

### TECHNICAL FIELD

The present invention relates to the field of power and electronics, and in particular, to a coupled inductor and a power converter.

### BACKGROUND

Currently, an interleaved parallel technology is applied more widely to field of power and electronics, and especially, a multi-level power converter using the interleaved parallel technology is applied more widely. Multiple power bridge arms that are included in the multi-level power converter using the interleaved parallel technology are coupled by using multiple windings or coils in a coupled inductor, and run in an interleaved manner, so that on and off frequencies of output can be improved and an output ripple current can be reduced. Because the coupled inductor can generate leakage inductance, if the coupled inductor is directly connected to a load, a filter inductor can be saved, thereby reducing costs and a system volume. However, when a relatively high common mode current passes through the coupled inductor, a relatively strong leakage magnetic field exists in air, which may cause an eddy current loss in windings of the coupled inductor.
From DE 3533323 A1 yoke coils with at least one ring-shaped ion core are known. From US 2012/0206232 A1 transformers with stacked magnetic cores are known. From JP 2008-041879 A transformers with a core shape for reduced leakage of magnetic flux are known. From US 2013/127434 A1 coupled inductor arrays are known. From US 2011/0025445 A1 components with magnetically coupled cores are known. From EP 2088603 A2 three-phase reactors for power transmission are known. From JP H02-203507 A three-phase shunt reactor cores are known. From EP 2685477 A1 hybrid transformer cores are known.

### SUMMARY

Embodiments of the present invention provide a coupled inductor and a power converter, which can reduce an eddy current loss caused in windings of a coupled inductor.
According to a first aspect, a coupled inductor is provided, including a magnetic core and at least two windings, where the magnetic core includes at least two magnetic cylinders and two opposite magnet yokes, the at least two magnetic cylinders are disposed between the two opposite magnet yokes, the at least two windings are respectively wound around the at least two magnetic cylinders, the at least two windings are in a one-to-one correspondence with the at least two magnetic cylinders, and the at least two windings do not extend out of the two opposite magnet yokes in at least one direction, where each direction of the at least one direction is a direction perpendicular to axes of the at least two magnetic cylinders.

Each magnet yoke of the two opposite magnet yokes includes at least two first parts corresponding to the at least two magnetic cylinders and at least one second part between the at least two first parts, and the at lest two first parts each have a greater width than a width of the at least one second part.

With reference to the first aspect, in a first possible implementation manner, the two opposite magnet yokes extend out of the at least two windings in the at least one direction.

With reference to the first possible implementation manner, in a second possible implementation manner, the two opposite magnet yokes extend out of the at least two windings in two opposite directions.

With reference to the first possible implementation manner, in a third possible implementation manner, the two opposite magnet yokes extend out of the at least two windings in four directions in which every two directions are opposite.

With reference to the first aspect or any one of the first to third possible implementation manners of the first aspect, in a fourth possible implementation manner, each magnet yoke of the two opposite magnet yokes includes an angle portion, and the angle portion surrounds a part of each of the at least two windings.

With reference to the first aspect, in a fifth possible implementation manner, the at least two windings are aligned with the two opposite magnet yokes in at least one direction.

With reference to the fifth possible implementation manner, in a sixth possible implementation manner, the two opposite magnet yokes are aligned with the at least two windings in two opposite directions.

With reference to the fifthe possible implementation manner, in a seventh possible implementation manner, the two opposite magnet yokes are aligned with the at least two windings in four directions in which every two directions are opposite.

With reference to the first aspect or any one of the foregoing possible implementation manners, in an eighth possible implementation manner, the at least two magnetic cylinders include two magnetic cylinders or three magnetic cylinders.

According to a second aspect, a power converter is provided, including: at least two power bridge arms; and the coupled inductor according to any one of the possible implementation manners of the first aspect, where the at least two power bridge arms are respectively connected to at least two windings of the coupled inductor.

According to the technical solutions in the embodiments of the present invention, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a sectional view of a structure of a common coupled inductor having three magnetic cylinders;
FIG. 2A is a schematic structural diagram of a coupled inductor according to an example useful for the understanding of the present invention;
FIG. 2B is a sectional view along A-A of the coupled inductor shown in FIG. 2A;
FIG. 2C is a sectional view along B-B of the coupled inductor shown in FIG. 2A;
FIG. 2D is a sectional view along C-C of the coupled inductor shown in FIG. 2A;
FIG. 3A is a sectional view of a coupled inductor according to another example useful for the understanding of the present invention;
FIG. 3B is another sectional view of a coupled inductor according to another example useful for the understanding of the present invention;
FIG. 4 is a sectional view of a coupled inductor according to an embodiment of the present invention;
FIG. 5A is a sectional view of a coupled inductor according to another example useful for the understanding of the present invention;
FIG. 5B is another sectional view of a coupled inductor according to another example useful for the understanding of the present invention;
FIG. 5C is still another sectional view of a coupled inductor according to another example useful for the understanding of the present invention; and
FIG. 6 is a schematic structural diagram of a power converter according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The embodiments of the present invention are applied to a multi-level power converter using an interleaved parallel technology. In the embodiments of the present invention, a level of an electrical level of the multi-level power converter is not limited. For example, the multi-level power converter may be a two-level power converter, a three-level power converter, a five-level power converter, or the like. In the embodiments of the present invention, a type of the multi-level power converter is not limited either. For example, the multi-level power converter may be a diode-clamped multi-level power converter, a capacitor-clamped multi-level power converter, or the like.

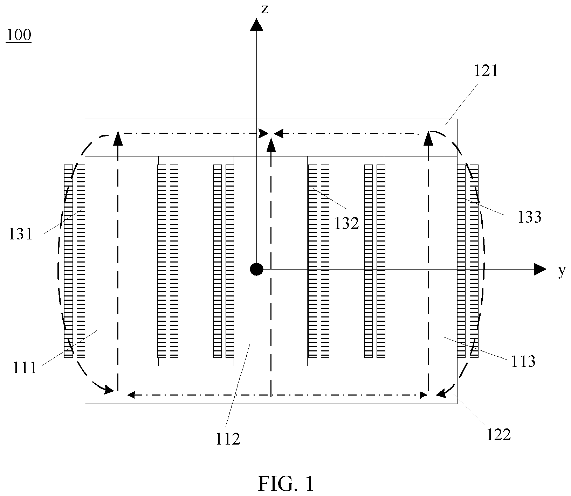

FIG. 1 is a sectional view of a structure of a common coupled inductor having three magnetic cylinders.

A sectional view of a structure of a common coupled inductor 100 having three magnetic cylinders along a y-z plane is shown in FIG. 1. The coupled inductor 100 includes magnetic cylinders 111, 112, and 113, an upper magnet yoke 121, a lower magnet yoke 122, and windings 131, 132, and 133 respectively wound around the magnetic cylinders 111, 112, and 113. Because a left side face of the winding 131 and a right side face of the winding 133 respectively extend out of two side faces: a left side face and a right side face of the upper magnet yoke 121 and the lower magnet yoke 122, when a relatively high common mode current passes through the coupled inductor 100, a leakage magnetic field that is generated by magnetic flux leakage in air cuts the windings 131 and 133 of the inductor, thereby causing an eddy current loss in the windings. When a load of a power converter at which the coupled inductor is located is relatively small, a power of the power converter is relatively low, but the eddy current loss accounts for a relatively large ratio of a total power, thereby leading to decreased efficiency of the power converter.

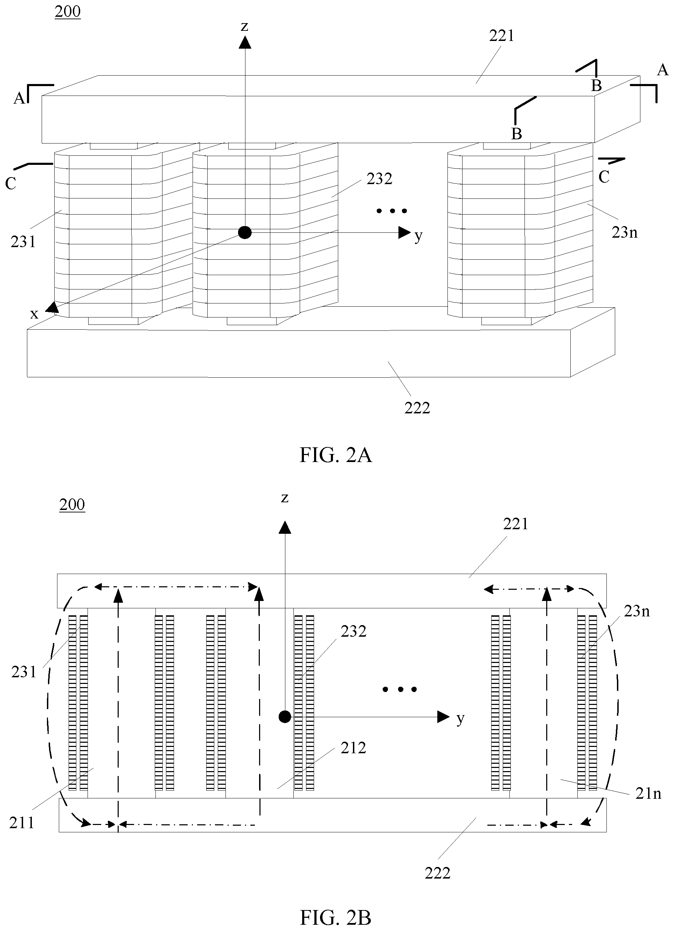

FIG. 2A is a schematic three-dimensional structural diagram of a coupled inductor 200 according to an example useful for the understanding of the present invention.

A coupled inductor 200 shown in FIG. 2A includes: a magnetic core and at least two windings.

The magnetic core includes at least two magnetic cylinders and two opposite magnet yokes 221 and 222. The at least two magnetic cylinders are disposed between the two opposite magnet yokes 221 and 222, and at least two windings 231, 232, ..., and 23n are respectively wound around the at least two magnetic cylinders. The at least two windings 231, 232, ..., and 23n are in a one-to-one correspondence with the at least two magnetic cylinders. The at least two windings 231, 232, ..., and 23n do not extend out of the two opposite magnet yokes 221 and 222 in at least one direction. Each direction of the at least one direction is a direction perpendicular to axes of the at least two magnetic cylinders.

Specifically, according to this example, the at least one direction may include one or more of an x direction, a y direction, a reverse direction of the x direction, or a reverse direction of the y direction. Side faces of the two opposite magnet yokes include side faces perpendicular to the x direction, the y direction, the reverse direction of the x direction, and the reverse direction of the y direction. A z direction is a direction parallel to the axes of the magnetic cylinders, and any two directions of the x direction, the y direction, and the z direction are perpendicular to each other. In other words, the side faces of the at least two windings may not extend out of the side faces of the two opposite magnet yokes in one or more directions of the x direction, the y direction, the reverse direction of the x direction, or the reverse direction of the y direction; or the side faces of the at least two windings fall within a coverage of the two magnet yokes.

For example, in the x direction, a front side face of each winding of the at least two windings 231, 232, ..., and 23n may not extend out of front side faces of the upper magnet yoke 221 and the lower magnet yoke 222. Alternatively, in the reverse direction of the x direction, a rear side face of each winding of the at least two windings 231, 232, ..., and 23n may not extend out of rear side faces of the upper magnet yoke 221 and the lower magnet yoke 222. In the y direction, a right side face of each winding of the at least two windings 231, 232, ..., and 23n may not extend out of right side faces of the upper magnet yoke 221 and the lower magnet yoke 222, and in the reverse direction of the y direction, a left side face of the winding 231 may not extend out of left side faces of the upper magnet yoke 221 and the lower magnet yoke 222.

For another example, in the y direction, right side faces of the upper magnet yoke 221 and the lower magnet yoke 222 may extend out of a right side face of the winding 23n, and in the reverse direction of the y direction, left side faces of the upper magnet yoke 221 and the lower magnet yoke 222 may be aligned with a left side face of the winding 231.

According to this example, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

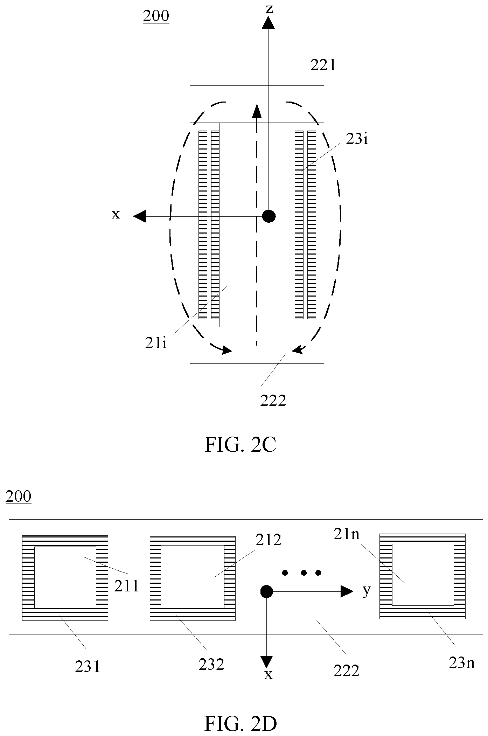

In the embodiment in FIG. 2, a description is provided by using an example in which the coupled inductor 200 includes three or more magnetic cylinders. The at least two magnetic cylinders may also include two magnetic cylinders.

For ease of description, FIG. 2 merely shows a part of a structure of the coupled inductor 200, and the technical solution of this embodiment of the present invention is described in detail by using the part of the structure as an example. However, this example is not limited to this.

Optionally, according to an example useful for the understanding of the present invention, the two opposite magnet yokes extend out of the at least two windings in the at least one direction. In other words, the side faces of the two opposite magnet yokes extend out of the side faces of the at least two windings in one or more of the x direction, the y direction, the reverse direction of the x direction, or the reverse direction of the y direction.

For example, in the y direction, the right side faces of the upper magnet yoke 221 and the lower magnet yoke 222 may extend out of the right side face of the winding 23n. Alternatively, in the reverse direction of the y direction, the left side faces of the upper magnet yoke 221 and the lower magnet yoke 222 may extend out of the left side face of the winding 231, which can reduce cutting of the windings by a leakage magnetic field that is generated by magnetic flux leakage in air, thereby reducing an eddy current loss in the windings.

For another example, in the y direction, the right side faces of the upper magnet yoke 221 and the lower magnet yoke 222 may extend out of the right side face of the winding 23n, and in the x direction, the front side faces of the upper magnet yoke 221 and the lower magnet yoke 222 may extend out of a side face of each winding of the at least two windings 231, 232, ..., and 23n, which can more reduce cutting of the windings by a leakage magnetic field that is generated by magnetic flux leakage in air, thereby more reduce an eddy current loss in the windings.

Specifically, according to this example, the two opposite magnet yokes extend out of the at least two windings in two opposite directions.

FIG. 2B is a sectional view along A-A of the coupled inductor shown in FIG. 2A. FIG. 2B is a sectional view of the coupled inductor 200 shown in FIG. 2A in a y-z plane.

As shown in FIG. 2B, at least two magnetic cylinders 211, 212, ..., and 21n of the coupled inductor 200 are disposed between the upper magnet yoke 221 and the lower magnet yoke 222, and the at least two windings 231, 232, ..., and 23n are respectively wound around the at least two magnetic cylinders 211, 212, ..., and 21n.

In the y direction, the right side faces of the upper magnet yoke 221 and the lower magnet yoke 222 extend out of the right side face of the winding 23n. In the reverse direction of the y direction, the left side faces of the upper magnet yoke 221 and the lower magnet yoke 222 extend out of the left side face of the winding 231. A normal direction of the right side faces is the same as the reverse direction of the y direction, and a normal direction of the left side faces is the same as the y direction. In this way, there are fewer opportunities that a leakage magnetic field that is generated by magnetic flux leakage in air cuts the windings 231 and 23n of the inductor. Therefore, an eddy current loss caused by cutting of winding coils of the inductor by the leakage magnetic field can be greatly reduced.

FIG. 2C is a sectional view along B-B of the coupled inductor shown in FIG. 2A. A coupled inductor 200 shown in FIG. 2C is a sectional view of the coupled inductor 200 shown in FIG. 2A in an x-z plane.

As shown in FIG. 2C, any magnetic cylinder 21i of the at least two magnetic cylinders of the coupled inductor 200 is disposed between the upper magnet yoke 221 and the lower magnet yoke 222, and one winding 23i of the at least two windings is wound around the magnetic cylinder 21i. A value of i ranges from 1 to n, and n is an integer greater than or equal to 2.

In the x direction, left side faces of the upper magnet yoke 221 and the lower magnet yoke 222 extend out of a left side face of the winding 23i, and in the reverse direction of the x direction, right side faces of the upper magnet yoke 221 and the lower magnet yoke 222 extend out of a right side face of the winding 23i. A leakage magnetic field that is generated by magnetic flux leakage in air may not cut the winding 23i of the inductor. Therefore, an eddy current loss caused by cutting of winding coils of the inductor by the leakage magnetic field can be greatly reduced.

According to this example, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

FIG. 2D is a sectional view along C-C of the coupled inductor shown in FIG. 2A. A coupled inductor 200 shown in FIG. 2D is a sectional view of the coupled inductor 200 shown in FIG. 2A in an x-y plane.

According to this example, the two opposite magnet yokes extend out of the at least two windings in four directions in which every two directions are opposite.

As shown in FIG. 2D, the at least two magnetic cylinders 211, 212, ..., and 21n of the coupled inductor 200 are disposed between the upper magnet yoke (not shown) and the lower magnet yoke 222, and the at least two windings 231, 232, ..., and 23n are respectively wound around the at least two magnetic cylinders 211, 212, ..., and 21n.

In the x direction, the front side faces of the upper magnet yoke (not shown) and the lower magnet yoke 222 extend out of the front side face of each winding of the at least two windings 231, 232, ..., and 23n. In the reverse direction of the x direction, the rear side faces of the upper magnet yoke (not shown) and the lower magnet yoke 222 extend out of the rear side face of each winding of the at least two windings 231, 232, ..., and 23n.

In the y direction, the right side faces of the upper magnet yoke (not shown) and the lower magnet yoke 222 extend out of the right side face of the winding 23n, and in the reverse direction of the y direction, the left side faces of the upper magnet yoke (not shown) and the lower magnet yoke 222 extend out of the left side face of the winding 231.

According to this example, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved. For ease of description of this example, the technical solution in this example is described in detail by using a coupled inductor having three magnetic cylinders as an example, but this embodiment of the present invention is not limited to this.

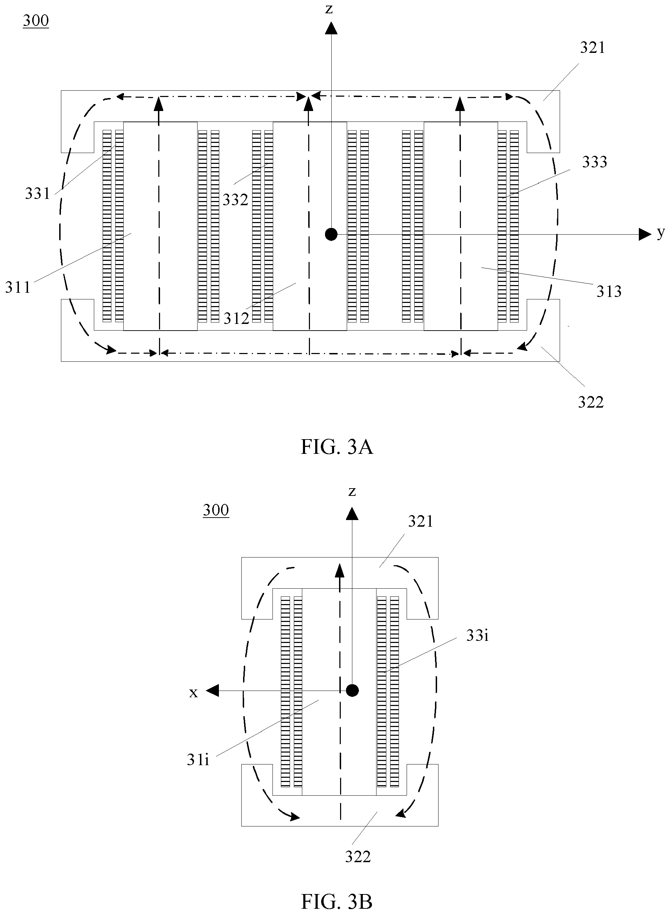

FIG. 3A is a sectional view of a coupled inductor 300 according to another example useful for the understanding of the present invention. A coupled inductor 300 shown in FIG. 3A is a sectional view of the coupled inductor 300 in an x-z plane.

According to this example, each magnet yoke of two opposite magnet yokes includes an angle portion, and the angle portion surrounds a part of each of at least two windings.

As shown in FIG. 3A, the coupled inductor 300 includes: magnetic cylinders 311, 312, and 313, an upper magnet yoke 321, a lower magnet yoke 322, and windings 331, 332, and 333 respectively wound around the magnetic cylinders 311, 312, and 313. The magnetic cylinders 311, 312, and 313 are disposed between the upper magnet yoke 321 and the lower magnet yoke 322.

After extending out of a right side face of the winding 333 in a y direction, the upper magnet yoke 321 forms an angle portion in a reverse direction of a z direction, and the angle portion surrounds an upper-end part of the right side face of the winding 333; and after extending out of the right side face of the winding 333 in the y direction, the upper magnet yoke 321 and the lower magnet yoke 322 form an angle portion in a z direction, and the angle portion surrounds a lower-end part of the right side face of the winding 333.

After extending out of a left side face of the winding 331 in a reverse direction of the y direction, the upper magnet yoke 321 forms an angle portion, and the angle portion surrounds an upper-end part of the left side face of the winding 331 in a reverse direction of the z direction; and after extending out of the left side face of the winding 331 in the reverse direction of the y direction, the upper magnet yoke 321 and the lower magnet yoke 322 form an angle portion, and the angle portion surrounds a lower-end part of the left side face of the winding 331 in the z direction.

FIG. 3B is another sectional view of a coupled inductor 300 according to another example useful for the understanding of the present invention. A coupled inductor 300 shown in FIG. 3B is a sectional view of the coupled inductor 300 in an x-z plane.

As shown in FIG. 3B, the coupled inductor 300 includes: a magnetic cylinder 31i, an upper magnet yoke 321, a lower magnet yoke 322, and a winding 33i wound around the magnetic cylinder 31i. The magnetic cylinder 31i is disposed between the upper magnet yoke 321 and the lower magnet yoke 322, and i ranges from 1 to 3.

After extending out of a side face of each winding of the winding 33i in an x direction, the upper magnet yoke 321 forms an angle portion in a reverse direction of a z direction, and the angle portion surrounds an upper-end part of a side face of each winding of the winding 33i; and after extending out a side face of each winding of the winding 33i in the x direction, the lower magnet yoke 322 forms an angle portion in the z direction, and the angle portion surrounds a lower-end part of a side face of each winding of the winding 33i.

After extending out of a left side face of the winding 33i in the x direction, the upper magnet yoke 321 forms an angle portion in the reverse direction of the z direction, and the angle portion surrounds an upper-end part of the left side face of the winding 33i; and after extending out of a right side face of the winding 33i in the reverse direction of the x direction, the upper magnet yoke 321 forms an angle portion in the reverse direction of the z direction, and the angle portion surrounds an upper-end part of the right side face of the winding 33i. After extending out of the left side face of the winding 33i in the x direction, the lower magnet yoke 322 forms an angle portion in the z direction, and the angle portion surrounds a lower-end part of the left side face of the winding 33i; and after extending out of the right side face of the winding 33i in the reverse direction of the x direction, the lower magnet yoke 322 forms an angle portion in the z direction, and the angle portion surrounds a lower-end part of the right side face of the winding 33i.

According to this example, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

It should be understood that, after extending out of four side faces of the windings 331, 332, and 333 in the x direction, the reverse direction of the x direction, the y direction, and the reverse direction of the y direction, the upper magnet yoke 321 and the lower magnet yoke 322 included in the coupled inductor 300 may further form angle portions in the z direction and the reverse direction of the z direction, and the angle portions surround a part of the six side faces of the windings 331, 332, and 333, so that cutting of winding coils of an inductor by a leakage magnetic field can be more reduced, and an eddy current loss caused when a magnetic field cuts the winding coils of the inductor can be more reduced, thereby improving efficiency of a system with a small load.

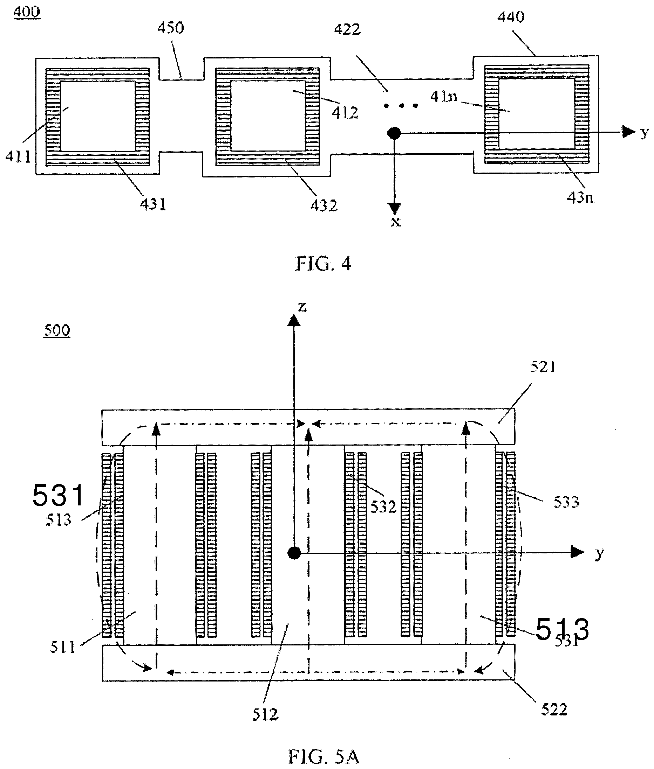

FIG. 4 is a sectional view of a coupled inductor 400 according to an embodiment of the present invention. A coupled inductor 400 shown in FIG. 4 is a sectional view of the coupled inductor 400 in an x-y plane.

According to this embodiment of the present invention, each magnet yoke of two opposite magnet yokes includes at least two first parts corresponding to at least two magnetic cylinders and at least one second part between the at least two first parts, and the at least two first parts each have a width greater than a width of the at least one second part.

As shown in FIG. 4, at least two magnetic cylinders 411, 412, ..., and 41n of the coupled inductor 400 are disposed between an upper magnet yoke (not shown) and a lower magnet yoke 422, and at least two windings 431, 432, ..., and 43n are respectively wound around the at least two magnetic cylinders 411, 412, ..., and 41n. The upper magnet yoke (not shown) and the lower magnet yoke 422 separately include n first parts 440 and n-1 second parts 450. Each second part 450 is located between two first parts 440, and in an x direction, the first parts 440 each have a width greater than a width of the second parts 450. n is an integer greater than or equal to 2.

In other words, side faces of the first parts 440 may be aligned with side faces of the windings or may extend out of side faces of the at least two windings.

According to this embodiment of the present invention, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved. Moreover, because only the first parts, which correspond to magnetic cylinders, of the magnet yokes are extended, costs of the coupled inductor can be reduced.

It should be understood that, according to this embodiment of the present invention, in the x direction, the first parts 440 each may have a width greater than the width of the second part 450, which can also reduce cutting of winding coils of an inductor by a leakage magnetic field to an extent, thereby reducing an eddy current loss caused by the cutting of the winding coils of the inductor by the leakage magnetic field.

It should be further understood that, according to this embodiment of the present invention, a magnet yoke may include an angle portion, and the angle portion surrounds a lower-end part or upper-end part of a winding.

Optionally, in another embodiment of the present invention, at least two windings are aligned with two opposite magnet yokes in at least one direction. In other words, side faces of the two opposite magnet yokes are aligned with side faces of the at least two windings in one or more of the x direction, a y direction, a reverse direction of the x direction, or a reverse direction of the y direction.

For example, in the y direction, a right side face of a winding 43n is aligned with right side faces of the upper magnet yoke (not shown) and the lower magnet yoke 422, or in the reverse direction of the y direction, a left side face of the winding 431 is aligned with left side faces of the upper magnet yoke (not shown) and the lower magnet yoke 422, which can reduce cutting of windings by a leakage magnetic field that is generated by magnetic flux leakage in air, thereby reducing an eddy current loss in the windings.

For ease of description of this embodiment of the present invention, the technical solution in this embodiment of the present invention is described in detail by using a coupled inductor having three magnetic cylinders as an example, but this embodiment of the present invention is not limited to this.

FIG. 5A is a sectional view of a coupled inductor 500 according to another example useful for the understanding of the present invention. A coupled inductor 500 shown in FIG. 5A is a sectional view of the coupled inductor 500 in a y-z plane.

In this example, two opposite magnet yokes are aligned with at least two windings in two opposite directions.

As shown in FIG. 5A, the coupled inductor 500 includes: magnetic cylinders 511, 512, and 513, an upper magnet yoke 521, a lower magnet yoke 522, and windings 531, 532, and 533 respectively wound around the magnetic cylinders 511, 512, and 515. The magnetic cylinders 511, 512, and 515 are disposed between the upper magnet yoke 521 and the lower magnet yoke 522.

In a y direction, right side faces of the upper magnet yoke 521 and the lower magnet yoke 522 are aligned with a right side face of a winding 53n, and in a reverse direction of the y direction, left side faces of the upper magnet yoke 521 and the lower magnet yoke 522 are aligned with a left side face of a winding 531. In this way, cutting of windings of an inductor by a leakage magnetic field that is generated by magnetic flux leakage in air can be reduced, thereby reducing an eddy current loss caused by cutting of winding coils of the inductor by the leakage magnetic field.

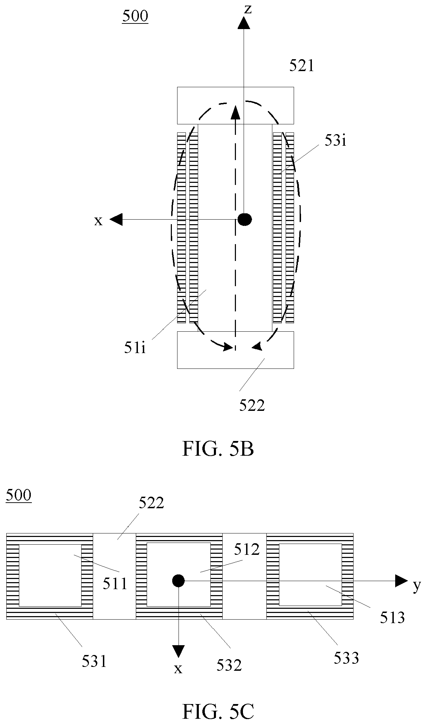

FIG. 5B is another sectional view of a coupled inductor 500 according to another example useful for the understanding of the present invention. A coupled inductor 500 shown in FIG. 5B is a sectional view of the coupled inductor 500 in an x-z plane.

As shown in FIG. 5B, the coupled inductor 500 includes: a magnetic cylinder 51i, an upper magnet yoke 521, a lower magnet yoke 522, and a windings 53i wound around the magnetic cylinder 51i. The magnetic cylinder 51i is disposed between the upper magnet yoke 521 and the lower magnet yoke 522, and i ranges from 1 to 3.

In an x direction, front side faces of the upper magnet yoke 521 and the lower magnet yoke 522 are aligned with a front side face of the winding 53i, and in a reverse direction of the x direction, rear side faces of the upper magnet yoke 521 and the lower magnet yoke 522 are aligned with a rear side face of the winding 53i. In this way, cutting of windings of an inductor by a leakage magnetic field that is generated by magnetic flux leakage in air can be reduced, thereby reducing an eddy current loss caused by cutting of winding coils of the inductor by the leakage magnetic field.

According to this example of the present invention, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

FIG. 5C is still another sectional view of a coupled inductor 500 according to an example useful for the understanding of the present invention. A coupled inductor 500 shown in FIG. 5C is a sectional view of the coupled inductor 500 in an x-y plane.

According to this example, two opposite magnet yokes are aligned with at least two windings in four directions in which every two directions are opposite.

As shown in FIG. 5C, the coupled inductor 500 includes three magnetic cylinders 511, 512, and 513 that are disposed between an upper magnet yoke (not shown) and a lower magnet yoke 522, and the three windings 531, 532, and 533 are respectively wound around the three magnetic cylinders 511, 512, and 513.

In an x direction, front side faces of the upper magnet yoke (not shown) and the lower magnet yoke 522 are aligned with a front side face of each winding of the three windings 531,532, and 533, and in a reverse direction of the x direction, rear side faces of the upper magnet yoke (not shown) and the lower magnet yoke 522 are aligned with a rear side face of each winding of the three windings 531, 532, and 533.

In a y direction, right side faces of the upper magnet yoke (not shown) and the lower magnet yoke 522 are aligned with a right side face of the winding 533, and in a reverse direction of the y direction, left side faces of the upper magnet yoke (not shown) and the lower magnet yoke 522 are aligned with a left side face of the winding 531.

According to this example, the magnet yokes may be extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

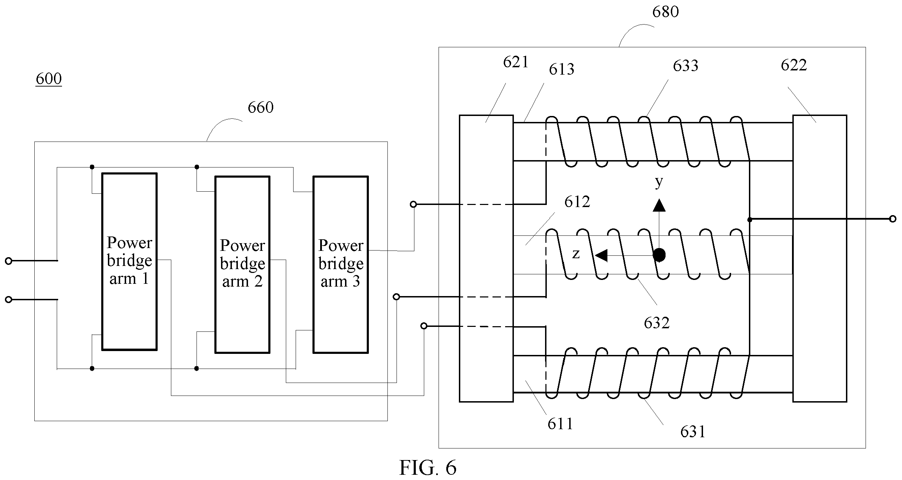

FIG. 6 is a schematic structural diagram of a power converter 600 according to an embodiment of the present invention. The power converter 600 includes: at least two power bridge arms and the coupled inductor described in the foregoing embodiments. At least two windings of the coupled inductor are respectively connected to the at least two power bridge arms.

A description is provided by using three power bridge arms 660, and this embodiment of the present invention is not limited to this. The coupled inductor in this embodiment of the present invention may be connected to multiple power bridge arms, and each power bridge arm corresponds to one input end of the coupled inductor.

The power converter 600 shown in FIG. 6 includes three power bridge arms 660 and a coupled inductor 680.

A structure of the coupled inductor 680 is like the coupled inductor 500 shown in FIG. 5A in the foregoing embodiments of the coupled inductor, and a detailed description is appropriately omitted herein. Output ends of the three power bridge arms 660 are respectively connected to input ends of three windings 631, 632, and 633 included in the coupled inductor 680.

Specifically, input ends of a power bridge arm 1, a power bridge arm 2, and a power bridge arm 3 are connected in parallel between the two input ends of the power converter 600. An output end of the power bridge arm 1 is connected to an input end of the winding 631 of the coupled inductor. An output end of the power bridge arm 2 is connected to an input end of the winding 632 of the coupled inductor. An output end of the power bridge arm 3 is connected to an input end of the winding 633 of the coupled inductor. Output ends of the windings 631, 632, and 633 are coupled together and connected to an output end of the power converter 600. The coupled inductor 680 includes first magnetic cylinders 611, 612, and 613, an upper magnet yoke 621, a lower magnet yoke 622, and the three windings 631, 632, and 633. The first magnetic cylinders 611, 612, and 613 are disposed between the upper magnet yoke 621 and the lower magnet yoke 622, and two side faces: left side faces and right side faces of the upper magnet yoke 621 and the lower magnet yoke 622 are respectively aligned with a left side face of the winding 631 and a right side face of the winding 633 or extend out of a left side face of the winding 631 and a right side face of the winding 633. The three windings 631, 632, and 633 are respectively wound around the three magnetic cylinders 611, 612, and 613.

Therefore, the magnet yokes of the power converter in this embodiment of the present invention are extended in at least one direction, so that the at least two windings do not extend out of the magnet yokes in at least one direction, which can reduce cutting of the windings of the coupled inductor by a leakage magnetic field, thereby reducing an eddy current loss caused by the windings of the coupled inductor. In addition, when a load of the power converter at which the coupled inductor is located is relatively small, efficiency of the power converter can also be obviously improved.

## Claims

1. A coupled inductor (200), comprising a magnetic core and at least two windings (231, 232), wherein
the magnetic core comprises at least two magnetic cylinders (211, 212) and two opposite magnet yokes (221, 222), the at least two magnetic cylinders (211, 212) are disposed between the two opposite magnet yokes (221, 222), the at least two windings (231, 232) are respectively wound around the at least two magnetic cylinders (211, 212), the at least two windings (231, 232) are in a one-to-one correspondence with the at least two magnetic cylinders (211, 212), and the at least two windings (231, 232) do not extend out of the two opposite magnet yokes (221, 222) in at least one direction, wherein each direction of the at least one direction is a direction perpendicular to axes of the at least two magnetic cylinders (211, 212), **characterized in that** each magnet yoke (221, 222) of the two opposite magnet yokes (221, 222) comprises at least two first parts (440) corresponding to the at least two magnetic cylinders (211, 212) and at least one second part (450) between the at least two first parts (440), and the at least two first parts (440) each have a width greater than a width of the at least one second part (450).

2. The coupled inductor according to claim 1, wherein the two opposite magnet yokes (221, 222) extend out of the at least two windings (231, 232) in the at least one direction.

3. The coupled inductor according to claim 2, wherein the two opposite magnet yokes (221, 222) extend out of the at least two windings (231, 232) in two opposite directions.

4. The coupled inductor according to claim 2, wherein the two opposite magnet yokes (221, 222) extend out of the at least two windings (231, 232) in four directions including a pair of directions are opposite.

5. The coupled inductor according to any one of claims 1 to 4, wherein each magnet yoke (221, 222) of the two opposite magnet yokes (221, 222) comprises an angle portion, and the angle portion surrounds a part of each of the at least two windings (231, 232).

6. The coupled inductor according to claim 1, wherein the at least two windings (231, 232) are aligned with the two opposite magnet yokes (221, 222) in at least one direction.

7. The coupled inductor according to claim 6, wherein the two opposite magnet yokes (221, 222) are aligned with the at least two windings (231, 232) in two opposite directions.

8. The coupled inductor according to claim 6, wherein the two opposite magnet yokes (221, 222) are aligned with the at least two windings (231, 232) in four directions in which every two directions are opposite.

9. The coupled inductor according to any one of claims 1 to 8, wherein the at least two magnetic cylinders (211, 212) comprise two magnetic cylinders (211, 212) or three magnetic cylinders (211, 212).

10. A power converter, comprising:
at least two power bridge (660) arms; and
the coupled inductor according to any one of claims 1 to 9, wherein the at least two power bridge arms (660) are respectively connected to at least two windings (231, 232) of the coupled inductor (200).

## Patentansprüche

1. Gekoppelte Induktivität (200), welche einen Magnetkern und wenigstens zwei Wicklungen (231, 232) umfasst, wobei
der Magnetkern wenigstens zwei Magnetzylinder (211, 212) und zwei gegenüberliegende magnetische Joche (221, 222) umfasst, die wenigstens zwei Magnetzylinder (211, 212) zwischen den zwei gegenüberliegenden magnetischen Jochen (221, 222) angeordnet sind, die wenigstens zwei Wicklungen (231, 232) jeweils um die wenigstens zwei Magnetzylinder (211, 212) gewickelt sind, die wenigstens zwei Wicklungen (231, 232) und die wenigstens zwei Magnetzylinder (211, 212) in eineindeutiger Beziehung zueinander stehen und die wenigstens zwei Wicklungen (231, 232) sich in wenigstens einer Richtung nicht aus den zwei gegenüberliegenden magnetischen Jochen (221, 222) hinaus erstrecken, wobei jede Richtung der wenigstens einen Richtung eine zu Achsen der wenigstens zwei Magnetzylinder (211, 212) senkrechte Richtung ist,
**dadurch gekennzeichnet, dass** jedes magnetische Joch (221, 222) der zwei gegenüberliegenden magnetischen Joche (221, 222) wenigstens zwei erste Teile (440), die den wenigstens zwei Magnetzylindern (211, 212) entsprechen, und wenigstens einen zweiten Teil (450) zwischen den wenigstens zwei ersten Teilen (440) umfasst und die wenigstens zwei ersten Teile (440) jeweils eine Breite aufweisen, die größer als eine Breite des wenigstens einen zweiten Teils (450) ist.

2. Gekoppelte Induktivität nach Anspruch 1, wobei sich die zwei gegenüberliegenden magnetischen Joche (221, 222) in der wenigstens einen Richtung aus den wenigstens zwei Wicklungen (231, 232) hinaus erstrecken.

3. Gekoppelte Induktivität nach Anspruch 2, wobei sich die zwei gegenüberliegenden magnetischen Joche (221, 222) in zwei entgegengesetzten Richtungen aus den wenigstens zwei Wicklungen (231, 232) hinaus erstrecken.

4. Gekoppelte Induktivität nach Anspruch 2, wobei sich die zwei gegenüberliegenden magnetischen Joche (221, 222) in vier Richtungen, darunter ein Paar Richtungen entgegengesetzt sind, aus den wenigstens zwei Wicklungen (231, 232) hinaus erstrecken.

5. Gekoppelte Induktivität nach einem der Ansprüche 1 bis 4, wobei jedes magnetische Joch (221, 222) der zwei gegenüberliegenden magnetischen Joche (221, 222) einen Winkelabschnitt umfasst und der Winkelabschnitt einen Teil jeder der wenigstens zwei Wicklungen (231, 232) umgibt.

6. Gekoppelte Induktivität nach Anspruch 1, wobei die wenigstens zwei Wicklungen (231, 232) zu den zwei gegenüberliegenden magnetischen Jochen (221, 222) in wenigstens einer Richtung ausgerichtet sind.

7. Gekoppelte Induktivität nach Anspruch 6, wobei die zwei gegenüberliegenden magnetischen Joche (221, 222) zu den wenigstens zwei Wicklungen (231, 232) in zwei entgegengesetzten Richtungen ausgerichtet sind.

8. Gekoppelte Induktivität nach Anspruch 6, wobei die zwei gegenüberliegenden magnetischen Joche (221, 222) zu den wenigstens zwei Wicklungen (231, 232) in vier Richtungen ausgerichtet sind, welche zwei Paare von entgegengesetzten Richtungen sind.

9. Gekoppelte Induktivität nach einem der Ansprüche 1 bis 8, wobei die wenigstens zwei Magnetzylinder (211, 212) zwei Magnetzylinder (211, 212) oder drei Magnetzylinder (211, 212) umfassen.

10. Stromrichter, umfassend:
wenigstens zwei Leistungsbrückenarme (660); und
die gekoppelte Induktivität nach einem der Ansprüche 1 bis 9, wobei die wenigstens zwei Leistungsbrückenarme (660) jeweils mit wenigstens zwei Wicklungen (231, 232) der gekoppelten Induktivität (200) verbunden sind.

## Revendications

1. Bobine d'induction couplée (200), comprenant un noyau magnétique et au moins deux enroulements (231, 232), dans laquelle
le noyau magnétique comprend au moins deux cylindres magnétiques (211, 212) et deux culasses d'aimant opposées (221, 222), les au moins deux cylindres magnétiques (211, 212) étant disposés entre les deux culasses d'aimant opposées (221, 222), les au moins deux enroulements (231, 232) étant respectivement enroulés autour des au moins deux cylindres magnétiques (211, 212), les au moins deux enroulements (231, 232) étant dans une correspondance biunivoque avec les au moins deux cylindres magnétiques (211, 212), et les au moins deux enroulements (231, 232) ne s'étendant pas au-delà des deux culasses d'aimant opposées (221, 222) dans au moins une direction, la direction ou chaque direction parmi les directions étant une direction perpendiculaire à des axes des au moins deux cylindres magnétiques (211, 212),
**caractérisée en ce que**
chaque culasse d'aimant (221, 222) parmi les deux culasses d'aimant opposées (221, 222) comprend au moins deux premières parties (440) correspondant aux au moins deux cylindres magnétiques (211, 212) et au moins une deuxième partie (450) entre les au moins deux premières parties (440), et les au moins deux premières parties (440) ont chacune une largeur supérieure à une largeur de l'au moins une deuxième partie (450).

2. Bobine d'induction couplée selon la revendication 1, dans laquelle les deux culasses d'aimant opposées (221, 222) s'étendent au-delà des au moins deux enroulements (231, 232) dans l'au moins une direction.

3. Bobine d'induction couplée selon la revendication 2, dans laquelle les deux culasses d'aimant opposées (221, 222) s'étendent au-delà des au moins deux enroulements (231, 232) dans deux directions opposées.

4. Bobine d'induction couplée selon la revendication 2, dans laquelle les deux culasses d'aimant opposées (221, 222) s'étendent au-delà des au moins deux enroulements (231, 232) dans quatre directions comportant une paire de directions sont opposées.

5. Bobine d'induction couplée selon l'une quelconque des revendications 1 à 4, dans laquelle chaque culasse d'aimant (221, 222) parmi les deux culasses d'aimant opposées (221, 222) comprend une portion en angle, et la portion en angle entoure une partie de chacun des au moins deux enroulements (231, 232).

6. Bobine d'induction couplée selon la revendication 1, dans laquelle les au moins deux enroulements (231, 232) sont alignés avec les deux culasses d'aimant opposées (221, 222) dans au moins une direction.

7. Bobine d'induction couplée selon la revendication 6, dans laquelle les deux culasses d'aimant opposées (221, 222) sont alignées avec les au moins deux enroulements (231, 232) dans deux directions opposées.

8. Bobine d'induction couplée selon la revendication 6, dans laquelle les deux culasses d'aimant opposées (221, 222) sont alignées avec les au moins deux enroulements (231, 232) dans quatre directions, les directions étant opposées deux à deux.

9. Bobine d'induction couplée selon l'une quelconque des revendications 1 à 8, dans laquelle les au moins deux cylindres magnétiques (211, 212) comprennent deux cylindres magnétiques (211, 212) ou trois cylindres magnétiques (211, 212).

10. Convertisseur de puissance, comprenant :
au moins deux bras faisant ponts de puissance (660) ; et
la bobine d'induction couplée selon l'une quelconque des revendications 1 à 9, les au moins deux bras faisant ponts de puissance (660) étant respectivement reliés à au moins deux enroulements (231, 232) de la bobine d'induction couplée (200).
